# EUROPÄISCHE PATENTSCHRIFT

(11) **EP 1 566 609 B1**
(45) Veröffentlichungstag und Bekanntmachung des Hinweises auf die Patenterteilung: **03.01.2007**
(21) Anmeldenummer: 04026763.5
(22) Anmeldetag: 11.11.2004
(51) Int. Cl.: G01B 3/26, G01B 3/50

(54) **Vorrichtung zum Prüfen des Innenmasses einer Pressverbindung**
Device for measuring the internal dimension of a press fit
Dispositif pour mesurer les dimensions internes d'une connexion serrée

(30) Priorität: 13.02.2004 DE 102004007112
(43) Veröffentlichungstag der Anmeldung: 24.08.2005
(73) Patentinhaber: Indunorm Hydraulik GmbH, 47269 Duisburg (DE)
(72) Erfinder: König, Diemo, 45470 Mülheim (DE); Kolossa, Markus, 40822 Mettmann (DE)
(74) Vertreter: Röther, Peter

(56) Entgegenhaltungen:
- DE-C- 341 363
- DE-C- 588 788
- PATENT ABSTRACTS OF JAPAN Bd. 009, Nr. 334 (P-417), 27. Dezember 1985 (1985-12-27) & JP 60 158301 A (TOSHIBA KK), 19. August 1985 (1985-08-19)
- PATENT ABSTRACTS OF JAPAN Bd. 1996, Nr. 06, 28. Juni 1996 (1996-06-28) & JP 08 043003 A (NUCLEAR FUEL IND LTD), 16. Februar 1996 (1996-02-16)

## Beschreibung

Die Erfindung betrifft eine Vorrichtung zum Prüfen des Innenmaßes einer Pressverbindung eines Schlauches, eines Rohres oder dgl. mit einer Armatur gemäß dem Oberbegriff des Patentanspruches 1.

Diese Vorrichtung umfaßt mindestens zwei miteinander verbundene, in Abstand hintereinander derart angeordnete Prüfkörper, dass der in Prüfrichtung vorderste Prüfkörper das minimale und der hinterste das maximale Prüfmaß aufweist. Eine solche Vorrichtung ist auch aus der DE-C-588 788 bekannt.

Die Leistungsfähigkeit einer Schlauch- oder Rohrleitung ist im wesentlichen von der optimalen Verbindung zwischen Schlauch/Rohr und Armatur abhängig. Dabei ist diese Verbindung in keiner Norm standadisiert. Um eine optimale form- und kraftschlüssige Verbindung zwischen Schlauch/Rohr und Armatur herzustellen, geben nahezu alle Hersteller gemittelte Pressmaße an. Diese können jedoch im Hinblick auf die Fertigungstoleranzen nur Richtwerte sein. Die Berücksichtigung der einzelnen Wandstärken bzw. der Toleranzen in der Addition von Nippel, Schlauch/Rohr und Fassung ist entscheidend für das richtige Pressmaß. Ein Über- oder Unterpressen der Einbindung kann letztlich zu Ausfällen führen.

Ein Überpressen ist eine zu große Nippeleinschnürung durch eine starke Wandstärken-Kompression. Dabei wird insbesondere die Schlauchseele über den elastischen Bereich hinaus beansprucht und dauerhaft beschädigt. Ein Verspröden des Gummimaterials bei Schläuchen im Bereich der Einbindung ist die Folge. Die Impulsbelastungen können nicht mehr im Armaturenbereich abgebaut werden. Es kommt zu einer übermäßigen mechanischen Belastung und zum Ausreißen der Armatureneinbindung. Ferner besteht ein Risiko, dass die Armatur direkt Schaden nehmen kann und im Einhängebund einreißen kann. Auch kann die übermäßige Einschnürung erheblich zu Druckverlusten führen.

Im Gegensatz hierzu besteht beim Unterpressen durch einen zu geringen Anpressdruck die Gefahr, dass die Einbindung bei Druckbeaufschlagung undicht ist oder die Armatur aufgrund der geringen Haltekräfte ausreißt.

Die Nippeleinschnürung ist für den Einbinder ein prüfbarer Indikator, um eine optimale Verbindung herzustellen. Aufgrund der unterschiedlichen Wandstärketoleranzen der jeweiligen Fertigungslose müssen die Pressmaße den Gegebenheiten angepaßt werden. Ein Über- oder Unterpressen kann bei linearen Schlauch/Rohrverbindungen mit einem Dorn geprüft und ausgeschlossen werden. Etwa in der Mitte der Fassung (auch Griffzone genannt) muss es zu einer meßbaren Innendurchmesserverjüngung kommen. Der als Minusseite bezeichnete vordere Bereich des Prüfdorns mit minimalem Durchmesser muss dabei durch die gesamte Nippelbohrung geschoben werden können und der als Plusseite bezeichnete nachfolgende Bereich des Prüfdorns mit maximalem Durchmesser muss in der Griffzone anschlagen. Damit ist das optimale Pressmaß gefunden.

Stößt bereits die Minusseite in der Griffzone an, hat ein Überpressen und damit eine zu starke Einschnürung stattgefunden.

Wenn aber auch die Plusseite des Dorns nicht in der Griffzone anschlägt, ist die Pressung noch nicht optimal, und es kann dann nachgepresst werden. Diese Nachpressung kann in kleinen Schritten durchgeführt werden, wobei durch wiederholtes Prüfen mit dem Dorn die optimale Einbindung erreicht werden kann.

Der Einsatz eines derartigen einfachen Prüfdorns ist -wie eben beschrieben- lediglich bei geraden Verbindungen möglich.

Ist der Schlauch bzw. das Rohr jedoch an eine bogenförmige Armatur angeschlossen, kann mit dem bekannten Prüfdorn nicht gearbeitet werden.

Bislang behilft sich der Einbinder bei Bogenarmaturen damit, dass er ein Muster anfertigt, indem er eine äquivalente gerade Armatur einsetzt, die geprüft wird, und danach mit den gleichen Pressparametern dann die Verbindung zur Bogenarmatur hergestellt wird.

Die DE-C-341 363 beschreibt eine Vorrichtung zur Messung von Innendurchmessern von Rohrkrümmungen, bei der an einem Ende eines biegsamen, in achsialer Richtung unveränderlichen Führungsschlauches ein messender Mehrpunktmesstaster befestigt ist, der sich durch Aufspreizen an die Rohrinnenwand anlegt.

Der Erfindung liegt daher die Aufgabe zugrunde, eine Vorrichtung der eingangs genannten Art so auszubilden, dass eine Pressverbindung zwischen einem Schlauch bzw. einem Rohr und einer bogenförmigen Armatur auf einfache Art und Weise überprüft werden kann.

Die Erfindung löst diese Aufgabe gemäß dem kennzeichnenden Teil des Patentanspruchs 1 dadurch dass die mindestens zwei Prüfkörper gelenkig miteinander verbunden sind.

Mit der Hilfe der erfindungsgemäßen Vorrichtung ist es nun möglich, die Pressverbindung zwischen Schlauch bzw. Rohr und der bogenförmigen Armatur zu prüfen, indem an dem Schlauch bzw. dem Rohr entgegengesetzten Ende der bogenförmigen Armatur die Vorrichtung eingeführt wird, wobei durch die gelenkige

Verbindung der einzelnen Prüfkörper der Krümmung des Bogens gefolgt werden kann. Die Überprüfung der Pressverbindung ist somit genauso einfach wie bei linearen Verbindungen.

Gemäß dem Merkmal des Patentanspruchs 2 sind die Prüfkörper im Querschnitt in etwa rechteckig ausgebildet, wobei die kürzeren Seiten des Rechtecks das Prüfmaß definieren und konvex gekrümmt sind.

Diese Ausgestaltung trägt der Tatsache Rechnung, dass beim Biegen der Armatur im Bereich der Biegung die rohrförmige Armatur einen ovalen Querschnitt (Abflachung) erhält. Die erfindungsgemäße Ausgestaltung der Prüfkörper hat den Vorteil, dass durch korrektes Einführen der Prüfkörper in die Armatur trotz der Abflachung im Bogenbereich derselben kein Verkanten oder Steckenbleiben auftreten kann.

Die in etwa konvexe Ausgestaltung der Seitenflächen, die gleichzeitig das Prüfmaß definieren, dient dabei der verkantungsfreien Führung der Prüfkörper.

Die Gelenkigkeit der Verbindung der einzelnen Prüfkörper kann durch verschiedene Maßnahmen erreicht werden.

Anspruch 3 schlägt vor, dass die gelenkige Verbindung der Prüfkörper durch Scharniere verwirklicht ist. Dabei kann eine zwei Prüfkörper miteinander verbindende Stange mit ihren Enden jeweils an einem Prüfkörper gelenkig befestigt sein. Eine andere Möglichkeit besteht darin, dass die Prüfkörper jeweils auf einer Stange befestigt sind und ein Gelenk zwischen den beiden Stangen vorgesehen ist.

Eine weitere Alternative ist durch den Anspruch 4 gegeben, nämlich dadurch, dass die gelenkige Verbindung zwischen den Prüfkörpern durch ein Federstahlband verwirklicht ist, auf dem die Prüfkörper befestigt sind.

Gemäß Ansprüch 5 ist vorgesehen, dass die gelenkige Verbindung zwischen den Prüfkörpern durch einen spiralförmigen Draht oder eine spiralförmige Welle verwirklicht ist, auf dem der/die Prüfkörper befestigt sind.

Schließlich ist gemäß Anspruch 6 vorgesehen, dass die gelenkige Verbindung zwischen den Prüfkörpern durch eine elastische Kunststoffstange verwirklicht ist, auf der die Prüfkörper befestigt sind.

Die Erfindung ist jedoch auf die hier vorgestellten Alternativen nicht beschränkt.

Um die Führung der Vorrichtung in der bogenförmigen Armatur zu verbessern, ist gemäß Anspruch 7 vorgesehen, dass in Abstand zum hintersten Prüfkörper auf der gelenkigen Verbindung ein Führungskörper angeordnet ist.

Schließlich ist gemäß Anspruch 8 vorgesehen, dass an dem dem vordersten Prüfkörper entgegengesetzten Ende der gelenkigen Verbindung ein Handgriff zur Handhabung der Vorrichtung vorgesehen ist.

Obwohl die erfindungsgemäße Vorrichtung speziell für bogenförmige Armaturen entwickelt worden ist, ist selbstverständlich auch die Anwendung auf gerade Armaturen möglich.

Die Erfindung wird im folgenden anhand von Zeichnungen dargestellt und erläutert.

Es zeigen
- Fig. 1a - c: verschiedene Nippeleinschnürungen bei Pressverbindungen
- Fig. 2: seitlich im Schnitt die erfindungsgemäße Prüfvorrichtung im Ausschnitt
- Fig. 3: Prinzipskizze der erfindungsgemäßen Prüfvorrichtung

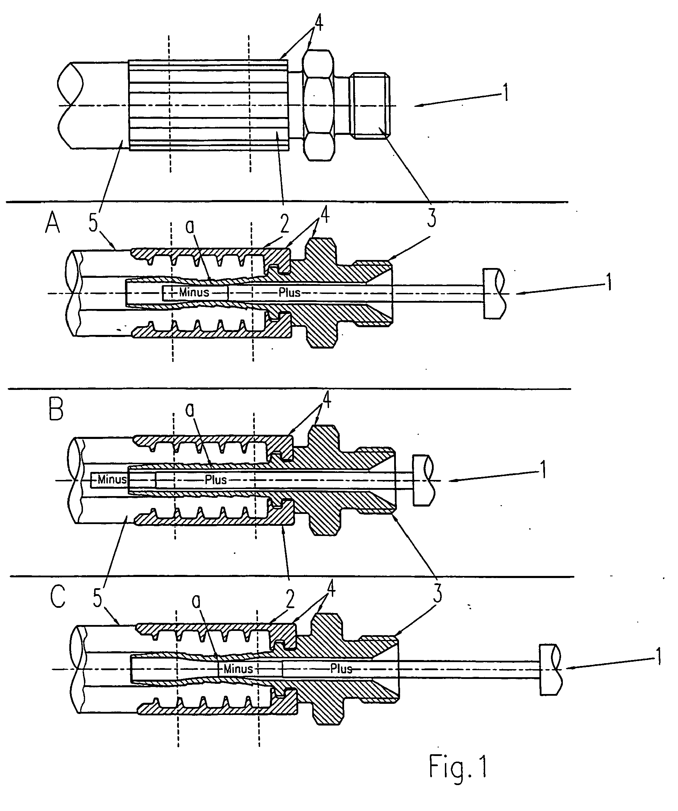

In den Figuren 1a bis c sind drei verschiedene Zustände von Pressverbindungen dargestellt, wobei mit dem Bezugszeichen 1 die Pressverbindung allgemein bezeichnet wird.

Zwischen einer Fassung 2 und einem Nippel 3 ist der mit der Armatur 4 zu verbindende Schlauch 5 eingepresst.

Die Figur 1a beschreibt den Zustand, in dem die Einschnürung des Nippels 3 am Ort a optimal ist. Die Figur 1b beschreibt den Zustand, wenn die Verpressung nicht ausreicht und keine Einschnürung stattgefunden hat, während die Figur 1c den Zustand zeigt, in dem die Verpressung zu stark war und somit eine unerwünscht starke Einschnürung stattgefunden hat.

In der Figur 1 ist aus Gründen der Übersichtlichkeit halber eine gerade Armatur dargestellt.

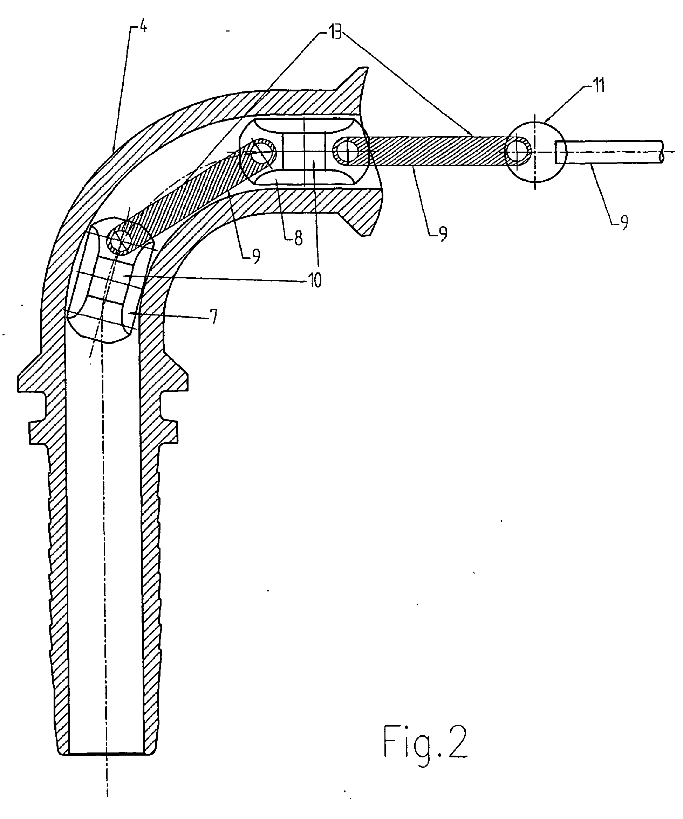

In der Figur 2 ist dagegen eine bogenförmige Armatur 4 dargestellt, in die eine erfindungsgemäße Vorrichtung 6 zum Prüfen des Innenmaßes einer nicht dargestellten Pressverbindung eines Schlauches, der ebenfalls nicht dargestellt ist, mit der Armatur, eingeführt ist.

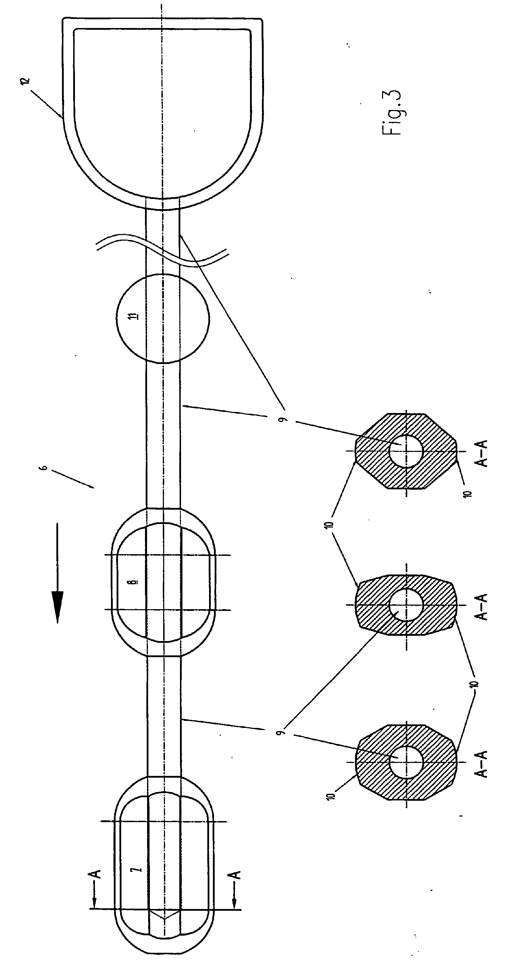

Eine derartige Vorrichtung 6 ist in der Figur 3 in Draufsicht dargestellt.

Sie besteht aus einem Prüfkörper- 7 und einem zweiten Prüfkörper 8, die mittels einer gelenkigen, insbesondere flexiblen Verbindung 9 miteinander verbunden sind. Diese flexible Verbindung kann ein Federstab bzw. Federelement aus Metall oder Kunststoff sein. Hauptsache ist jedoch, dass er bei aller Flexibilität schubsteif ist.

Die Seitenwangen 10 der Prüfkörper 7 und 8 definieren das Prüfmaß, welches beim Prüfkörper 7 mit - und beim Prüfkörper 8 mit + bezeichnet ist. D.h., dass das Prüfmaß des Prüfkörpers 7 ein Minimum und dass das Prüfmaß des Prüfkörpers 8 ein Maximum ist. Die Seitenwangen 10 der Prüfkörper 7 und 8 sind in etwa konvex geformt, wie es in der Darstellung unten links gezeigt ist. Eine weitere mögliche Formgebung ist aus der Schnittzeichnung in der Figur unten rechts dargestellt. Weitere Ausgestaltungen sind möglich. Wichtig ist jedoch, dass die Ausgestaltung dazu beiträgt, dass die Vorrichtung 6 verkantungsfrei in der bogenförmigen Armatur 4 geführt werden kann.

Zur Unterstützung dieser guten verkantungsfreien Führung dient ein ebenfalls auf der Verbindung 9 angeordneter Führungskörper 11, der beispielsweise eine Kugel sein kann.

Schließlich verfügt die Vorrichtung 6 über einen Handgriff 12.

Wie sich aus der Figur 2 ergibt, wird die Vorrichtung 6 mit dem Prüfkörper 7 voran in die bogenförmige Armatur 4 eingeführt. Erreicht dieser Prüfkörper den Punkt a (siehe Figur 1), muss er diesen passieren, um sicherzustellen, dass die Einschnürung nicht zu stark ist. Beim weiteren Vorschieben der Vorrichtung 6 muss nun der Prüfkörper 8 im Punkt a anschlagen. Somit ist sichergestellt, dass die Verpressverbindung in Ordnung ist. Würde der Prüfkörper 8 ebenfalls den Punkt a passieren können, wäre das ein Zeichen dafür, dass die Verpressung nicht ausreichend war. Dann kann durch Nachpressen die Verbindung nachgebessert werden.

Stößt bereits beim Vorschieben der Vorrichtung 6 der Prüfkörper 7 im Punkt a an, ist wie schon gesagt, die Einschnürung zu stark und das Teil ist schrottreif.

Wie sich aus der Figur 2 weiter ergibt, kann die Verbindung 9 zwischen den Prüfkörpern 7 und 8 und dem hier nicht dargestellten Führungskörper 11 auch aus an den Körpern 7, 8, 11 angelenkten Stäben 13 bestehen.

Die aus Figur 3 unten sich ergebenden in etwa rechteckigen Querschnittsformen der Prüfkörper 7 und 8 sind darin begründet, dass sich beim Biegen der Armatur 4 eine Abflachung des Querschnitts derselben ergibt, der eine ovale Ausgestaltung erhält. Um die Vorrichtung 6 trotzdem verkantungsfrei einführen und vorschieben zu können, sind die Prüfkörper 7 und 8 daher ebenfalls flacher ausgebildet.

## Patentansprüche

1. Vorrichtung zum Prüfen des Innenmaßes einer Pressverbindung eines Schlauches (5), eines Rohres oder dgl. mit einer Armatur (4), die mindestens einen Nippel (3) und eine Fassung (2), zwischen denen das Schlauchende bzw. Rohrende aufgenommen ist, aufweist und insbesondere bogenförmig ausgebildet ist, wobei die Vorrichtung mindestens zwei miteinander verbundene, in Abstand hintereinander angeordnete Prüfkörper mit unterschiedlichen Prüfmaßen (-, +) derart aufweist, dass der in Prüfrichtung vorderste Prüfkörper (7) das minimale und der hinterste (8) das maximale Prüfmaß aufweist, **dadurch gekennzeichnet, dass** die mindestens zwei Prüfkörper (7, 8) gelenkig miteinander verbunden sind.

2. Vorrichtung nach Anspruch 1,
**dadurch gekennzeichnet,**
**daß** die Prüfkörper (7,8) im Querschnitt in etwa rechteckig ausgebildet sind, wobei die kürzeren Seiten (10) des Rechtecks das Prüfmaß definieren und konvex gekrümmt sind.

3. Vorrichtung nach Anspruch 1 oder 2,
**dadurch gekennzeichnet,**
**daß** die gelenkige Verbindung (9) der Prüfkörper (7,8) durch Scharniere (13) verwirklicht ist.

4. Vorrichtung nach Anspruch 1 oder 2,
**dadurch gekennzeichnet,**
**daß** die gelenkige Verbindung (9) zwischen den Prüfkörpern (7,8) durch ein Federstahlband verwirklicht ist, auf dem die Prüfkörper (7,8) befestigt sind.

5. Vorrichtung nach einem der Ansprüche 1 oder 2,
**dadurch gekennzeichnet,**
**daß** die gelenkige Verbindung (9) zwischen den Prüfkörpern (7,8) durch einen spiralfederförmigen Draht verwirklicht ist, auf dem die Prüfkörper (7,8) befestigt sind.

6. Vorrichtung nach Anspruch 1 oder 2,
**dadurch gekennzeichnet,**
**daß** die gelenkige Verbindung (9) zwischen den Prüfkörpern (7,8) durch eine elastische Kunststoffstange verwirklicht ist, auf dem die Prüfkörper (7,8) befestigt sind.

7. Vorrichtung nach einem der Ansprüche 1 bis 6,
**dadurch gekennzeichnet, daß** in Abstand zum hintersten Prüfkörper (8) auf der gelenkigen Verbindung (9) ein Führungskörper (11) angeordnet ist.

8. Vorrichtung nach einem der Ansprüche 1 bis 7,
**gekennzeichnet durch**
einen Handgriff (12) zur Handhabung der Vorrichtung (6).

## Claims

1. Device for checking the inside dimension of a compression joint of a hose (5), of a tube or similar, with a mounting part (4) which has at least one nipple (3) and one bracket (2) between which the hose end or tube end is accepted, and in particular is arcuate in form, whereby the device has at least two linked test pieces disposed one behind the other at a distance, with different test dimensions (-, +) in such a way that the foremost test piece (7) displays the minimum and the rearmost (8) the maximum test dimension, **characterised in that** the at least two test pieces (7, 8) are linked to each other via a hinged joint.

2. Device according to claim 1,
**characterised in that**
the test pieces (7, 8) are of a form which is approximately rectangular in cross-section, while the shorter sides (10) of the rectangle define the test dimension and are curved so as to be convex.

3. Device according to claim 1 or 2,
**characterised in that**
the hinged joint (9) of the test pieces (7, 8) is realised by hinges (13).

4. Device according to claim 1 or 2,
**characterised in that**
the hinged joint (9) between the test pieces (7, 8) is realised by a spring steel band, on which the test pieces (7, 8) are fixed.

5. Device according to claim 1 or 2,
**characterised in that**
the hinged connection (9) between the test pieces (7, 8) is realised by a helical spring-shaped wire, on which the test pieces (7, 8) are fixed.

6. Device according to claim 1 or 2,
**characterised in that**
the hinged joint (9) between the test pieces (7, 8) is realised by an elastic plastic rod, on which the test pieces (7, 8) are fixed.

7. Device according to one of claims 1 to 6,
**characterised in that**
a guiding body (11) is disposed on the hinged joint (9) at a distance from the rearmost test piece (8).

8. Device according to one of claims 1 to 7,
**characterised by**
a handle (12) to manoeuvre the device (6).

## Revendications

1. Dispositif pour contrôler la cote intérieure d'une liaison sertie d'un tuyau (5), d'un tube ou similaire avec une robinetterie (4) qui comporte au moins un raccord (3) et une monture (2) entre lesquels est logée l'extrémité du tuyau ou du tube, et est réalisée en particulier en forme d'arc, le dispositif comportant au moins deux corps d'essai reliés entre eux, disposés espacés l'un derrière l'autre avec différentes cotes d'essai (-, +), de manière que le corps d'essai (7) le plus en avant dans le sens du contrôle présente la cote d'essai minimale et le corps d'essai (8) le plus en arrière présente la cote d'essai maximale, **caractérisé en ce que** les au moins deux corps d'essai (7, 8) sont reliés l'un à l'autre de manière articulée.

2. Dispositif selon la revendication 1, **caractérisé en ce que** les corps d'essai (7, 8) présentent une section transversale à peu près rectangulaire, les plus petits côtés (10) du rectangle définissant la cote d'essai et étant convexes.

3. Dispositif selon la revendication 1 ou 2, **caractérisé en ce que** la liaison (9) articulée des corps d'essai (7, 8) est réalisée par des charnières (13).

4. Dispositif selon la revendication 1 ou 2, **caractérisé en ce que** la liaison articulée (9) entre les corps d'essai (7, 8) est réalisée par une bande d'acier à ressort sur laquelle sont fixés les corps d'essai (7, 8).

5. Dispositif selon l'une des revendications 1 ou 2, **caractérisé en ce que** la liaison articulée (9) entre les corps d'essai (7, 8) est réalisée par un fil en forme de ressort spiral sur lequel sont fixés les corps d'essai (7, 8).

6. Dispositif selon la revendication 1 ou 2, **caractérisé en ce que** la liaison articulée (9) entre les corps d'essai (7, 8) est réalisée par une tige élastique en matière plastique sur laquelle sont fixés les corps d'essai (7, 8).

7. Dispositif selon l'une des revendications 1 à 6,
**caractérisé en ce qu'**à distance du corps d'essai (8) le plus en arrière sur la liaison articulée (9) est disposé un corps de guidage (11).

8. Dispositif selon l'une des revendications 1 à 7,
**caractérisé par** une poignée (12) pour manipuler le dispositif (6).
